# EUROPÄISCHE PATENTSCHRIFT

(11) **EP 4 514 504 B1**
(45) Veröffentlichungstag und Bekanntmachung des Hinweises auf die Patenterteilung: **23.09.2026**
(21) Anmeldenummer: 23723148.5
(22) Anmeldetag: 25.04.2023
(51) Int. Cl.: B01D 46/10, B01D 46/121, B01D 46/52, B05B 14/43

(54) **FILTERSTUFE**
FILTER STAGE
ÉTAGE DE FILTRE

(30) Priorität: 25.04.2022 DE 102022203975
(43) Veröffentlichungstag der Anmeldung: 05.03.2025
(73) Patentinhaber: Kara, Jürgen, 96465 Neustadt/Coburg (DE)
(72) Erfinder: Kara, Jürgen, 96465 Neustadt/Coburg (DE)
(74) Vertreter: Isarpatent
(86) Internationale Anmeldenummer: PCT/EP2023/060714
(87) Internationale Veröffentlichungsnummer: WO 2023/208874

(56) Entgegenhaltungen:
- CN-A- 109 224 681
- KR-B1- 102 036 483

## Beschreibung

### GEBIET DER ERFINDUNG

Die vorliegende Erfindung betrifft eine Filterstufe zur Verwendung in einem Filtermodul.

### TECHNISCHER HINTERGRUND

Filtermodule werden für unterschiedliche Anwendungen eingesetzt. Beispielsweise können diese im Bereich von Sprühkabinen zur Aufnahme von Farbnebel eingesetzt werden. Die Filtermodule dienen dabei zur Reinigung der von der Sprühkabine abgeführten Luft. Die Farbpartikel, welche nicht an einem zu besprühenden Objekt anhaften, können durch die Filtermodule abgeschieden werden. Derartige Filtermodule können demnach ebenso als Abscheider bzw. Abscheidermodule bezeichnet werden.

Für gewöhnlich besitzen Filtermodule eine Eintrittsseite, die für den Eintritt eines zu reinigenden Luftstroms ausgebildet ist. Auf einer gegenüberliegenden Seite ist bevorzugt eine Austrittsseite angeordnet, die zum Austritt des gereinigten Luftstroms dient.

Beispielsweise können mehrere gleichartige Filtermodule nebeneinander bzw. aufeinander angeordnet werden, sodass eine zusammenhängende Fläche entsteht, die beispielsweise unterhalb oder auch seitlich neben dem zu besprühenden Objekt angeordnet werden kann. Dabei sind alle Eintrittsseiten auf einer Seite der zusammenhängenden Fläche angeordnet. Bevorzugt wird sozusagen hinter den Filtermodulen ein Unterdruck erzeugt, sodass ein Luftstrom durch die Filtermodule entsteht, der von der Eintrittsseite in Richtung der Austrittsseite strömt. Durch den Luftstrom wird die zu reinigende Luft durch die Filtermodule hindurch geführt und gereinigt, indem die Partikel innerhalb der Filtermodule anhaften bzw. an den Filtermodulen abgeschieden werden.

Die Druckschrift EP 1 492 609 B1 zeigt ein Filtermodul in Form eines Hohlkörpers, das aus einem Papierstoff ausgebildet ist. Innerhalb des Filtermoduls sind zumindest zwei Wände angeordnet, die quer zur Richtung des eintretenden Luftstroms angeordnet sind. Die Wände weisen jeweils Öffnungen auf, wobei die Öffnungen der Wände von der Eintrittsseite in Richtung der Austrittsseite kleiner werden und/oder versetzt zueinander angeordnet sind. Durch die Wände entstehen Kammern innerhalb des Grundkörpers. Der zu reinigende Luftstrom wird mäanderförmig durch die unterschiedlich angeordneten Öffnungen in den hintereinander angeordneten Wänden geführt. Über einen Griff kann zumindest eine Kammer geöffnet werden, sodass in die Kammer ein Füllmaterial oder eine weitre Filterstufe eingesetzt werden kann.

Weiterhin ist aus der EP 3 167 948 A1 ein Filtermodul bekannt, das ebenso aus einem Hohlkörper besteht, in welchen unterschiedliche Reinigungsstrukturen eingesetzt werden können. Die hintereinander angeordneten Reinigungsstrukturen können einzeln entnommen werden, sodass unterschiedlich verschmutzte Reinigungsstrukturen zu unterschiedlichen Zeiträumen ausgewechselt werden können. Ebenso können andere Reinigungsstrukturen, insbesondere als zweite Filterstufen eingesetzt werden, um eine feine Endfilterung zu erzielen.

Nachteilig ist bei derartigen Filtermodulen, dass durch die Umleitung des Luftstroms in unterschiedliche Raumrichtungen die Anhaftungen der Partikel innerhalb des Filtermoduls sehr unterschiedlich, d. h. sehr ungleich verteilt, ausfällt. Dies resultiert aus der mäanderförmigen Führung des Luftstroms, wodurch der Luftstrom nach Eintritt auf der Eintrittsseite um annähernd 90° in jede mögliche Raumrichtung umgeleitet wird. Durch diese schlagartige Umleitung des Luftstroms, beispielsweise nach links, rechts, oben oder unten innerhalb des Filtermoduls, erfolgt eine abrupte und sehr starke Abbremsung. In einer ersten Kammer zwischen einer ersten und einer zweiten Wand, die der zu reinigende Luftstrom als erstes erreicht, werden folglich die meisten Partikel abgeschieden. Weiter hinten angeordnete Kammern werden nur noch von wenigen Partikeln erreicht. Die Effizienz und Lebensdauer jedes Filtermoduls wird dadurch verringert, da diese bereits ausgetauscht werden müssen, wenn weiter hinten angeordnete Bereiche innerhalb des Filtermoduls erst sehr geringe Partikelansammlungen aufweisen.

In der EP 3 167 948 A1 wird dies dadurch gelöst, dass einzelne Reinigungsstrukturen, die hintereinander innerhalb des Grundkörpers angeordnet sind, einzeln entnommen werden können. Dadurch kann die Reinigungsstruktur, welche am nächsten an der Eintrittsseite angeordnet ist, ausgetauscht werden. Des Weiteren kann auf die DE 10 2015 112 113 A1 und die US 2020/0197970 A1 verwiesen werden.

Während des Betriebs in einer Sprühkabine, wobei meist mehrere baugleiche Filtermodule nebeneinander bzw. aufeinander zu einer zusammenhängenden Fläche angeordnet sind, ist der Austausch einzelner Reinigungsstrukturen aus jedem einzelnen Filtermodul jedoch nur unter großem Zeitaufwand möglich. Insbesondere muss zum Austausch einer Reinigungsstruktur aus jedem einzelnen Filtermodul jeder einzelne Hohlkörper geöffnet werden. Dies ist bei nebeneinander sowie aufeinander angeordneten Filtermodulen nicht möglich. Demnach müsste die zusammenhängende Fläche aus Filtermodulen zunächst auseinandergebaut werden, sodass jedes einzelne Filtermodul zugänglich ist. Daraus resultiert ein enormer Zeitaufwand. In der Praxis ist der Austausch einzelner Reinigungselemente daher kaum möglich. Folglich wird erfahrungsgemäß das Filtermodul bereits dann komplett ausgetauscht, wenn lediglich das erste Reinigungselement derart verschmutzt ist, dass der Luftstrom dieses eine Reinigungselement nicht mehr durchströmen kann.

Zum weiteren Stand der Technik kann auf die CN 109 224 681 A verwiesen werden, die einen Filter eines Klimageräts zeigt, sowie auf die KR 102 036 483 B1, die ein Filteranlage für eine Lackiereinrichtung aufweist.

### ZUSAMMENFASSUNG DER ERFINDUNG

Vor diesem Hintergrund liegt der vorliegenden Erfindung die Aufgabe zugrunde, eine verbesserte Filterstufe anzugeben.

Erfindungsgemäß wird diese Aufgabe durch eine Filterstufe mit den Merkmalen des Patentanspruchs 1 gelöst.

Demgemäß ist vorgesehen:
Eine Filterstufe zur Verwendung in einem Filtermodul, welches zur Abscheidung von Partikeln aus verunreinigter Luft, insbesondere zur Abscheidung von Farbpartikeln aus einem Luftstrom, ausgebildet ist, mit einem Aufnahmeelement, das eine Eintrittsseite, für den Eintritt eines zu reinigenden Luftstroms, und eine Austrittsseite, für den Austritt des gereinigten Luftstroms, aufweist, wobei die Eintrittsseite und die Austrittsseite gegenüberliegend an dem Aufnahmeelement angeordnet sind, einem Filtereinsatz, der in dem Aufnahmeelement aufgenommen ist, wobei der Filtereinsatz zumindest zwei an einem Seitenabschnitt miteinander verbundene Teilabschnitte aufweist, die insbesondere jeweils als ebene Fläche oder als zwei zueinander abgewinkelte ebene Flächen ausgebildet sind, wobei die Teilabschnitte über zumindest ein Verbindungselement miteinander verbunden sind, wobei jeder Teilabschnitt als Sandwichpaneel ausgebildet ist, und zumindest ein Filterelement und ein Rahmenelement aufweist, wobei das Rahmenelement aus einem Papiermaterial ausgebildet ist.

Die der vorliegenden Erfindung zugrundeliegende Idee besteht darin, die Filterwirkung durch ein Sandwichpaneel zu erhöhen. Dabei kann beispielsweise durch angepasste Materialwahl der Filterelemente die Lebensdauer optimiert werden. Weiterhin ist es möglich, eine Art Vorfilter auszubilden, der beispielsweise ausgetauscht werden kann, um die weiteren Filter- und/oder Rahmenelemente ebenso bis zur Unbrauchbarkeit zu nutzen.

Die der vorliegenden Erfindung zugrundeliegende weitere Idee besteht darin, die Luftströmung nicht abzubremsen oder umzulenken, sondern stattdessen ein gleichmäßiges Durchströmen der Filterstufe von der Eintrittsseite zu der Austrittsseite zu ermöglichen, um eine ausgeglichene Anhaftung der Partikel an dem Filtereinsatz innerhalb des Aufnahmeelements zu ermöglichen.

Vorteilhafterweise muss daher der Filtereinsatz über die komplette Lebensdauer der Filterstufe nicht, oder nur teilweise ausgetauscht werden, wobei alle Elemente der Filterstufe bis zur Unbrauchbarkeit, d. h. bis zur Verstopfung durch abgeschiedene Partikel, verwendet werden können.

Es ist möglich, die Filterstufe als separate Filterstufe in bekannt Filtermodule, wie im Stand der Technik erläutert, zu integrieren. Dadurch kann eine abgestimmte Filterung innerhalb des Filtermoduls erzielt werden, wodurch die Abscheideergebnisse optimiert werden können.

Die Geometrie der Filterstufe kann nach dem Prinzip eines Baukastens in andere Filtermodule angepasst und integriert werden. Insgesamt wird daher das Abscheideverhalten des Filtermoduls effizienter ausgestaltet.

Ferner muss mit der vorgeschlagenen Filterstufe der Filtereinsatz nicht mit dem Aufnahmeelement verklebt oder verklammert werden, da dieser durch die Form des Aufnahmeelements in diesem gehalten wird.

Als Filterstufe ist ein Element zu verstehen, das bestimmte Filtereigenschaften aufweist. Die Filterstufe kann ein komplettes Filtermodul ausbilden oder als Teilelement, d. h. als eine Reinigungsstufe innerhalb eines Filtermoduls ausgebildet sein. Dabei kann die Filterstufe beispielsweise als eine Art Nachreinigungsstufe eingesetzt werden. Durch das Sandwichpaneel kann die Filtereigenschaft erheblich erhöht werden.

Als Filtereinsatz ist ein Element zu verstehen, an welchem die Partikel abgeschieden werden bzw. anhaften. Der Filtereinsatz ist bevorzugt als im Wesentlichen ebene Fläche ausgebildet. Weiterhein ist der Filtereinsatz bevorzugt zumindest teilweise aus einem luftdurchlässigen Material ausgebildet, sodass der Luftstrom durch das Material des Filtereinsatzes zumindest teilweise hindurchströmen kann. Dies wird durch das Sandwichpaneel erreicht.

Der Filtereinsatz ist als Sandwichpaneel ausgebildet und weist zumindest ein Filterelement und zumindest ein Rahmenelement auf. Das Filterelement kann beispielsweise aus einem strukturierten Papierelement und/oder aus einem Vliesmaterial ausgebildet sein. Als strukturiertes Papierelement ist beispielsweise ein Papiergelege, wie ein Paper Mesh, zu verstehen, das aus mehreren Schichten von dünnem, mehrfach geschlitzten Papierlagen gebildet werden kann. Ebenso kann der Filtereinsatz ein anstatt oder zusätzlich zu dem Papiergelege ein strukturiertes Kunststoffgelege oder Drahtgelege als Filtereinsatz aufweisen.

Benachbart zu den genannten strukturierten Filtereinsätzen kann ein Vliesmaterial angeordnet werden, um das Sandwichpaneel auszubilden. Das Sandwichpaneel erlangt Stabilität durch das Rahmenelement. Das Rahmenelement ist aus einem Papiermaterial gebildet und kann zumindest eine Aussparung bzw. Öffnung aufweisen. Insbesondere ist die Aussparung groß im Verhältnis zu den Abmessungen des Filtereinsatzes, sodass ein Großteil des durchströmenden Luftstroms auf das Filterelement auftrifft.

Das Rahmenelement kann aus zwei zueinander abwinkelbaren ebenen Flächen gebildet sein, die insbesondere jeweils zumindest eine Öffnung aufweisen. Dadurch kann ein zusammenhängender, insbesondere V-förmiger, Teilabschnitt ausgebildet werden. Die V-Form kann durch Falten an zumindest einem Falz erzielt werden. In jeder der zueinander abgewinkelten ebenen Flächen des Rahmenelements kann ein Filterelement eingesetzt werden. Zwei derartige V-förmige Teilabschnitte können durch zumindest ein Verbindungselement miteinander verbunden werden. Ebenso kann ein V-förmiger Teilabschnitt mit einem ebenen Teilabschnitt über zumindest ein Verbindungselement miteinander verbunden werden.

Ebenso kann ein zusammenhängendes Filterelement eingesetzt werden, das auch entlang des Falzes verläuft. Ein derartiger Teilabschnitt kann mit einem weiteren Teilabschnitt oder zwei zueinander abwinkelbaren ebenen Flächen verbunden werden.

In einer weiteren Ausführung können zwei Rahmenelemente das zumindest eine Filterelement von je einer Seite umschließen. Die beiden Rahmenelemente umschließen folglich zumindest ein dazwischenliegendes Filterelement. Dadurch kann ein besonders stabiler Filtereinsatz ausgebildet werden. Zumindest eines der Rahmenelemente kann innerhalb der Aussparung Unterteilungen, insbesondere in Form von Sprossen, aufweisen, um das Filterelement innerhalb des Rahmenelements zu stabilisieren.

Das Filterelement kann aus einzelnen, übereinanderliegenden oder geschichteten Einzelbahnen und/oder Fasern ausgebildet sein. In einer derartigen Ausführung sind bevorzugt zwei Rahmenelemente vorgesehen, die das Filterelement von zwei Seiten umschließen. Ein sogenannter Trägerrahmen und Deckrahmen sind vorteilhaft, um ein Verrutschen des losen Filterelements zu verhindern. Eines der Rahmenelemente weist bevorzugt zumindest eine Quer- und oder eine Längssprosse auf, um das lose Filtermaterial innerhalb der Rahmenebene zu halten.

Die einzelnen Schichten des Sandwichpaneels können miteinander verpresst und/oder verklebt sein.

Bevorzugt ist jeder Teilabschnitt vertikal in dem Aufnahmeelement ausgerichtet. Insbesondere verläuft jeder Teilabschnitt über die komplette Höhe des Aufnahmeelements, sodass voneinander getrennte vertikale Kammern ausgebildet werden, die durch die Teilabschnitte begrenzt sind.

Das Verbindungselement verläuft insbesondere über die komplette Höhe der Teilabschnitte. Insbesondere ist das Verbindungselement aus dem gleichen Material wie das Rahmenelement ausgebildet. Das Verbindungselement ist insbesondere lösbar ausgebildet, sodass der Filtereinsatz vor Ort an gegebene Bedingungen angepasst werden kann. Weiterhin kann das Verbindungselement eine Steckverbindung sein, und aus einem Kunststoffmaterial bestehen.

Jeder Teilabschnitt weist bevorzugt an zwei gegenüberliegenden Seiten jeweils einen Seitenabschnitt auf, der über ein Verbindungselement mit einem Seitenabschnitt eines benachbarten Teilabschnitts verbunden werden kann. Die Seitenabschnitte sind insbesondere als Randbereich jedes Teilabschnitts ausgebildet, der als Verbindungsbereich dient. Ist der Teilabschnitt V-förmig ausgebildet, so können die Seitenabschnitte des jeweiligen Teilabschnitts alle in Richtung der Eintrittsseite oder in Richtung der Austrittsseite ausgerichtet sein, wenn der Filtereinsatz in dem Aufnahmeelement angeordnet ist.

Die Filterstufe weist daher eine Baukastenstruktur auf, wodurch ein platzsparender Transport und ein Zusammenbau vor Ort möglich ist. Des Weiteren ist eine kostengünstige Herstellung möglich, da die einzelnen Elemente keine großen zusammenhängenden Elemente aufweisen.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform kann der Filtereinsatz zumindest drei, insbesondere drei bis zehn, Teilabschnitte aufweisen. In einer Ausführungsform können mehr als zehn Teilabschnitte vorgesehen sein. Vorteilhaft sind die Teilabschnitte identisch ausgebildet, sodass alle gleich hergestellt werden können.

Die Teilabschnitte, bzw. die Seitenabschnitte der Teilabschnitte, können insbesondere über ein Verbindungselement in Form einer Steckverbindung miteinander verbunden sein, sodass der Luftstrom von der Eintrittsöffnung in Richtung der Austrittsöffnung die Teilabschnitte mit dem Filtereinsatz passiert oder streift. Die Verbindung der Teilabschnitte erfolgt insbesondere formschlüssig und/oder luftdicht, sodass der Luftstrom gezielt und ohne Fehlleitung von der Eintrittsöffnung in Richtung der Austrittsöffnung verlaufen kann.

Eine Steckverbindung ermöglicht einen einfachen und schnellen Aufbau, der auch vor Ort weitgehend ohne Fachkenntnisse erfolgen kann. Dadurch sind die Module im aufgebauten und im nicht aufgebauten Zustand stabelbar und platzsparend transportierbar.

Gemäß einer Weiterbildung können zumindest zwei, insbesondere endseitig angeordnete, Teilabschnitte parallel zu einer Verbindungsebene zwischen der Eintrittsseite und der Austrittsseite ausgerichtet sein, wobei die Verbindungsebene als eine virtuelle Ebene, die rechtwinklig zwischen der Eintrittsseite und der Austrittsseite verläuft, ausgebildet ist. Als Verbindungsebene ist eine Ebene zu verstehen, die von der Eintrittsseite zur Austrittsseite verläuft. Bevorzugt ist die Verbindungsebene rechtwinklig zur Eintrittsseite und zur Austrittsseite angeordnet. Folglich sind die Teilabschnitte bevorzugt rechtwinklig zur Eintrittsseite und zur Austrittsseite ausgerichtet. Dies betrifft insbesondere die Teilabschnitte, die lediglich an einem Seitenabschnitt mit einem weiteren Teilabschnitt kontaktiert sind. Dadurch kann der Filtereinsatz innerhalb des Aufnahmeelements vorteilhaft gehalten und positioniert werden.

Gemäß einer Ausführungsform können zumindest zwei, insbesondere alle, Teilabschnitte geneigt, insbesondere um einen Winkel zwischen 5 und 50° geneigt, zu einer Verbindungsebene zwischen der Eintrittsseite und der Austrittsseite ausgerichtet sein, wobei die Verbindungsebene als eine virtuelle Ebene, die rechtwinklig zwischen der Eintrittsseite und der Austrittsseite verläuft, ausgebildet ist. Dadurch kann ein höherer Reinigungsgrad erzeugt werden, beispielsweise im Sinne einer Feinreinigung oder Endreinigung, da die Teilabschnitte geneigt bezüglich der Strömungsrichtung der Luftströmung ausgerichtet sind.

Gemäß einer vorteilhaften Ausführungsform kann der Seitenabschnitt im Wesentlichen rechtwinklig zwischen der Oberkante und der Unterkante angeordnet sein.

Gemäß einer vorteilhaften Ausführungsform können Seitenabschnitte benachbarter Teilabschnitte, die über jeweils zumindest ein Verbindungselement miteinander verbunden sind, an einer Seite des Filtereinsatzes angeordnet sein. Insbesondere können alle Seitenabschnitte, die über ein Verbindungselement miteinander verbunden sind, an einer Seite des Filtereinsatzes angeordnet sein Dies bedeutet, dass an einer Seite des Filtereinsatzes Verbindungselemente angeordnet sind, und an einer gegenüberliegenden Seite keine Verbindungselemente angeordnet sind. Dies wird insbesondere dadurch erreicht, dass V-förmige Teilabschnitte eingesetzt werden, die an einer Seite des Filtereinsatzes bereits miteinander verbunden sind.

Gemäß einer vorteilhaften Ausführungsform können Seitenabschnitte benachbarter Teilabschnitte an der Eintrittsseite über jeweils zumindest ein Verbindungselement miteinander verbunden sein, wobei auf der Austrittsseite die Seitenabschnitte der Teilabschnitte durchgängig ausgebildet sind, oder umgekehrt. Umgekehrt bedeutet, dass Seitenabschnitte benachbarter Teilabschnitte an der Austrittsseite über jeweils zumindest ein Verbindungselement miteinander verbunden sind, wobei auf der Eintrittsseite die Seitenabschnitte der Teilabschnitte durchgängig ausgebildet sind. Daher können alle Verbindungselemente in Richtung der Eintrittsseite bzw. in Richtung der Austrittsseite ausgerichtet sind. Dadurch können V-förmige Teilabschnitte alle auf einer Seite miteinander verbunden werden und eine zusammenhängende Zickzack-Struktur ausbilden. Des Weiteren kann an den Randbereichen des Filtereinsatzes ein V-förmiger Teilabschnitt mit einem Teilabschnitt verbunden werden, der aus einer ebenen Fläche ausgebildet ist.

Gemäß einer vorteilhaften Ausführungsform kann das Verbindungselement eine Klemmschiene umfassen und/oder zur Abscheidung von Partikeln dienen. Eine Klemmschiene kann aus einem Kunststoffmaterial bestehen. Insbesondere können zwei Klemmschienen angeordnet sein, die das Verbindungselement jeweils mit einem benachbarten Teilabschnitt verbinden. Insbesondere erfolgt die Verbindung zwischen dem Verbindungselement und einem Rahmenelement.

Gemäß einer vorteilhaften Ausführungsform kann das Verbindungselement u-förmige ausgebildet sein und einen jeweiligen Endbereich von zwei benachbarten Teilabschnitten umgreifen und/oder kontaktieren. Das u-Förmige Element kann dabei selbst zur Filterung dienen, indem daran ebenso Partikel abgeschieden werden können. Schenkel des u-förmigen Elements können mit jeweils einer Klemmschiene mit jeweils einem Rahmenelement, insbesondere mit einem Seitenabschnitt, klemmend fixiert werden.

Gemäß einer bevorzugten Ausführungsform kann der Filtereinsatz als eine Zickzack-Struktur ausgebildet sein. Vorteilhaft ist auf diese Weise ein Filtereinsatz ausbildbar, der eine stabile dreidimensionale Struktur aufweist und innerhalb des Aufnahmeelements geklemmt werden kann.

In einer bevorzugten Ausführungsform ist der Filtereinsatz als Zickzack-Struktur ausgebildet und vertikal in dem Aufnahmeelement ausgerichtet, sodass einzelne Taschen entstehen, die quer zu dem Luftstrom innerhalb des Aufnahmeelements ausgerichtet sind. Die Taschen werden dabei von Teilabschnitten des Filtereinsatzes gebildet, die geneigt zueinander angeordnet sind. Dadurch kann besonders effektiv eine Feinreinigung mit der Filterstufe erreicht werden.

Gemäß einer besonders bevorzugten Ausführungsform kann das Aufnahmeelement eine Oberseite und eine Unterseite aufweisen, wobei die Oberseite und/oder die Unterseite zumindest eine Lasche aufweist, die durch eine Ausstanzung in dem Aufnahmeelement gebildet ist. Dadurch kann die Lasche aus dem Material des Aufnahmeelements gebildet und durch Knicken, insbesondere entlang eines Falzes, als abstehende Lasche ausgeformt werden.

Die Lasche greift zwischen zwei Teilabschnitte ein, um diese zu positionieren. Die Lasche kann als flächiges Element ausgebildet sein, das mit einer Seitenfläche oder frontal zumindest ein Teilabschnitt, insbesondere zwei Teilabschnitte, kontaktiert und damit in der Ausrichtung hält bzw. positioniert.

Gemäß einer Ausführungsform können zumindest zwei Laschen an der Oberseite und/oder der Unterseite derart versetzt angeordnet sein, dass die Teilabschnitte positioniert, insbesondere in einer Zickzack-Struktur, gehalten werden. Dabei kann besonders vorteilhaft ein Filtereinsatz innerhalb des Aufnahmeelements ohne Klebeverbindung positioniert werden. Ist der Filtereinsatz als Zickzack-Struktur ausgebildet, greifen die Laschen bevorzugt in die Taschen ein, um den Filtereinsatz formgebend und stabil aufzunehmen. Die Filterstufe kann daher besonders einfach zusammengebaut werden, indem der Filtereinsatz von oben in das Aufnahmeelement eingeschoben wird. Das Aufnahmeelement kann anschließend vergleichbar zu einem Karton mit einem Steckverschluss verschlossen werden. Die Laschen können an der Oberseite und/oder an der Unterseite angeordnet sein, sodass der Filtereinsatz von oben und von unten innerhalb des Aufnahmeelements fixiert wird.

Bei einer vorteilhaften Ausführungsform können zwei Laschen miteinander verbunden sein, um eine Pyramidenform auszubilden. Dadurch kann beim Zusammenbau die Lasche aus einem im Wesentlichen zweidimensionalen Element zu einem dreidimensionalen Element gefaltet werden. Die Laschen können Hinterschnitte aufweisen, sodass diese miteinander klemmend fixiert werden können.

Die Laschen können aus dem vorhandenen Abfallmaterial, welches für die Öffnungen an der Eintrittsseite und/oder Austrittsseite herausgetrennt würde, insbesondere durch Stanzen mittels einer Stanzgeometrie, ausgebildet werden. Beispielsweise können die Laschen aus Material von Seitenelementen, insbesondere des Boden- oder Deckelelements, des Aufnahmeelements mittels einer Stanzgeometrie ausgebildet sein.

Bei einer vorteilhaften Ausführungsform kann zumindest eine Lasche konische Seitenkanten aufweisen, sodass die Teilabschnitte des Filtereinsatzes geneigt, insbesondere in einer Zickzack-Struktur, zwischen der Eintrittsseite und der Austrittsseite gehalten werden. Diese Ausführungsform eignet sind insbesondere für einen Filtereinsatz mit einer Zickzack-Struktur.

Gemäß einer Weiterbildung können das Aufnahmeelement und/oder der Filtereinsatz ein rezyklierbares Material und/oder Polyestermaterial enthalten. Zumindest eine Schicht des Filtereinsatzes kann aus einem Papiergelege, einem Polyestervlies, einem Vlies, einem Polyester, insbesondere mit einer Dichte von 250 g/m2 bis 300 g/m2, bevorzugt 290 g/m2 und/oder aus einem 3D-Filament ausgebildet sein. Dadurch kann der Filtereinsatz im Vergleich zu den verbleibenden Zwischenräumen zwischen den Teilelementen einen vergleichsweise geringen Querschnitt aufweisen, wodurch verbesserte Filtereigenschaften erzielt werden können. Vorteilhafterweise ist das Aufnahmeelement komplett aus Karton ausgebildet. Ein derartiges Filtermodul kann auch mit anhaftenden Partikeln einfach entsorgt, insbesondere verbrannt werden. Zudem sind die Herstellungskosten minimal.

Gemäß einer vorteilhaften Ausführungsform kann die Filterstufe ein Einschubmodul in einem Filtermodul ausbilden. Dadurch kann die Filterstufe in bekannte Filtermodule eingesetzt werden, wobei die Geometrie sowie der Grad der Filterung an spezifische Vorgaben angepasst werden kann.

Gemäß einer vorteilhaften Ausführungsform kann das Aufnahmeelement an der Eintrittsseite und an der Austrittsseite eine quadratische oder rechteckige Grundform aufweisen, wobei ein Abstand zwischen der Eintrittsseite und der Austrittsseite um ein Vielfaches kleiner als eine Seitenkante der Grundform ist, sodass ein flaches Aufnahmeelement ausgebildet wird. Der Abstand beschreibt dabei die Tiefe der Filterstufe. Diese kann insbesondere 80 bis 500 mm, bevorzugt 150 bis 300 mm, betragen. Die Grundfläche kann rechteckig oder quadratisch ausgebildet sein, mit einer Seitenlänge von 400 bis 600 mm, insbesondere 500 mm.

Bevorzugt ist die Filterstufe als eine Art Karton ausgebildet. Dadurch kann eine dreidimensionale Struktur ausgebildet werden, die einfach und schnell zusammengebaut werden kann. Verkleben, Klammern oder Blockverleimen der einzelnen Komponenten ist nicht notwendig, wodurch der Herstellungsprozess sehr vereinfacht wird. Zudem kann eine platzsparende Lagerung vor dem Zusammenbau sichergestellt werden.

Gemäß einer vorteilhaften Ausführungsform können die Teilabschnitte im Wesentlichen quer zu dem Luftstrom ausgerichtet sein. Dies ist vorteilhaft, wenn das Aufnahmeelement an der Eintrittsseite und an der Austrittsseite eine quadratische oder rechteckige Grundform aufweisen, wobei ein Abstand zwischen der Eintrittsseite und der Austrittsseite um ein Vielfaches kleiner als eine Seitenkante der Grundform ist.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Ausführungsform eines Aufnahmeelements einer Filterstufe;
- Fig. 2: eine Draufsicht auf Fig. 1 mit eingesetztem Filtereinsatz;
- Fig. 3: eine Ausführungsform eines Filtereinsatzes;
- Fig. 4: eine weitere Ausführungsform eines Filtereinsatzes;
- Fig. 5: eine weitere Ausführungsform eines Filtereinsatzes;
- Fig. 6: eine Ausführungsform eines Verbindungselements;
- Fig. 7: eine weitere Ausführungsform eines Verbindungselements;
- Fig. 8: eine Ausführungsform einer Filterstufe;
- Fig. 9: eine Draufsicht auf ein Aufnahmeelement;
- Fig. 10: ein Filtereinsatz gehalten an Laschen des Aufnahmeelements;
- Fig. 11: eine weitere Ausführungsform eines Filtereinsatzes;
- Fig. 12: eine Ausführungsform von zusammengesetzten Teilabschnitten;
- Fig. 13: eine weitere Ausführungsform von zusammengesetzten Teilabschnitten;
- Fig. 14: eine weitere Ausführungsform von zusammengesetzten Teilabschnitten;
- Fig. 15: eine weitere Ausführungsform eines Filtereinsatzes;
- Fig. 16: eine weitere Ausführungsform eines Filtereinsatzes;
- Fig. 17: zusammengesetzte Filterstufen zur Ausbildung eines Filtermoduls;
- Fig. 18: eine weitere Ausführungsform eines Filtermoduls;
- Fig. 19: eine weitere Ansicht der Ausführungsform aus Fig. 18;
- Fig. 20: eine weitere Ansicht der Ausführungsform aus Fig. 18 und 19.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

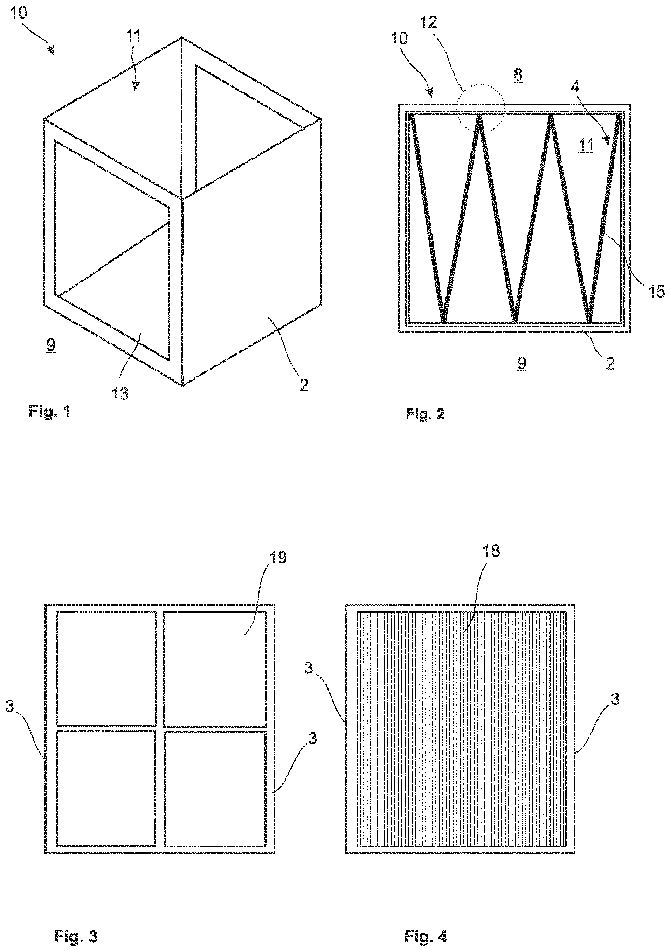

Fig. 1 zeigt ein Aufnahmeelement 2 für eine Filterstufe 10, das zur Abscheidung von Partikeln aus verunreinigter Luft, insbesondere zur Abscheidung von Farbpartikeln aus einem Luftstrom, ausgebildet sein kann. Das Aufnahmeelement 2 weist im Innern einen Hohlraum 11 auf, der an einer Eintrittsseite 9 eine Öffnung 13 aufweist. In dem Hohlraum 11 können unterschiedliche Filtereinsätze 4 in Form von beispielsweise unterschiedlichen Reinigungsstrukturen eingesetzt werden. Bevorzugt kann der Filtereinsatz von oben eingeschoben werden.

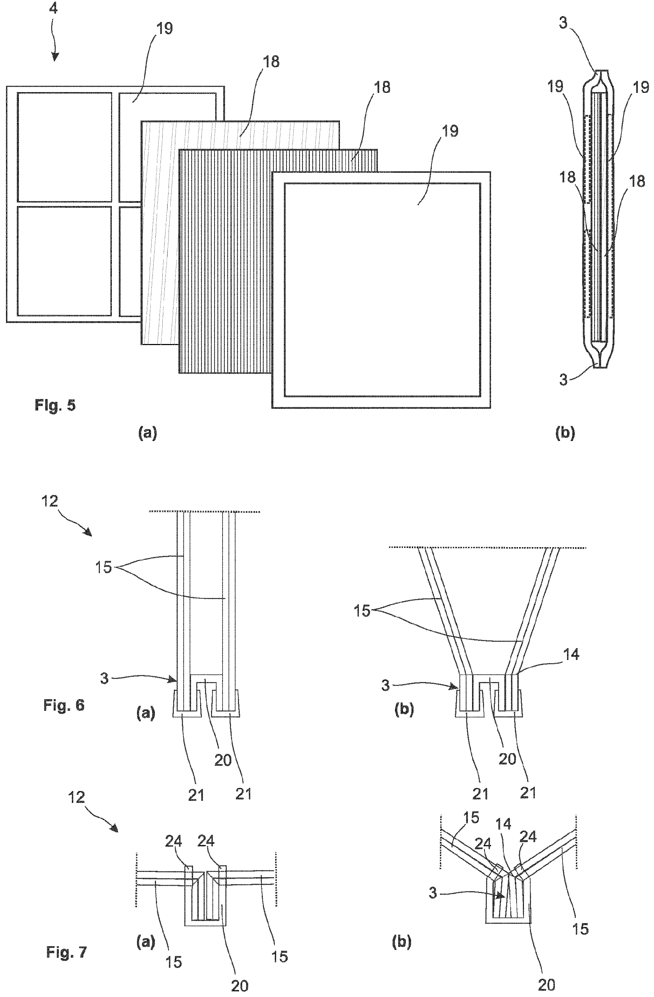

Fig. 2 zeigt eine Draufsicht auf Fig. 1. In dieser Darstellung ist der Filtereinsatz 4 erkennbar, welche in dieser Ausführungsform sechs Teilabschnitte 15 aufweist. Die Teilabschnitte 15 verlaufen abgewinkelt zu einer Verbindungsebene, welche von der Eintrittsseite 9 zur Austrittsseite 8 ausgerichtet ist. Die Teilabschnitte sind in einer Zickzack-Struktur angeordnet und an den jeweiligen Seitenabschnitten miteinander verbunden. Die Verbindungen können als Gelenke 12 ausgebildet sein, beispielsweise gezeigt in den Figuren 6 und 7. Die Teilabschnitte 15 sind jeweils als ebene Fläche und als Sandwichpaneele ausgebildet. Die Sandwichpaneele können unterschiedliche ausgestaltet sein, beispielsweise gezeigt in den Figuren 3 bis 5, 11 oder 12. Die Seitenabschnitte 3 verlaufen weiterhin bevorzugt im Wesentlichen vertikal zwischen einer Oberkante und einer Unterkante des Aufnahmeelements 2.

In einer nicht dargestellten Ausführung können die beiden endseitigen Teilabschnitte 15, d. h. der rechte und linke Teilabschnitt 15 in Fig. 2, parallel zu einer Ebene zwischen der Eintrittsseite und der Austrittsseite verlaufen. Dadurch können zwei Teilabschnitte 15 der Zickzack-Struktur das Aufnahmeelement 2 kontaktieren. Die Seitenflächen des Aufnahmeelements 2 können daher ebenso effektiv zur Filterung beitragen.

Wie beispielhaft in Fig. 3 gezeigt weist das Sandwichpaneel ein Rahmenelement 19 auf. Dieses dient zur Aufnahme und Halterung zumindest eines Filterelements 18, beispielhaft gezeigt in Fig. 4. Wenn das Filterelement 18 an dem Rahmenelement 19 befestigt ist, beispielsweise durch eine Klebeverbindung, verbleiben die Seitenabschnitte 3 als frei zugängliche Flächen zurück. Diese dienen zur Verbindung benachbarter Teilabschnitte 15.

Fig. 5 (a) zeigt eine weitere Ausführung eines Filtereinsatzes 4 in einer Explosionsdarstellung. Der Filtereinsatz weist zwei Rahmenelemente 19 auf, welche zwei Filterelemente 18 von zwei Seiten umschließen. Dadurch können die in sich nicht stabilen Filterelemente 18 in Form gehalten und stabilisiert werden. Fig. 5 (b) zeigt ein zusammengesetztes Filtermodul 4. Die Seitenabschnitte 3 überlappen dabei die Filterelemente 18, sodass die Seitenabschnitte miteinander verbunden werden können. Diese können miteinander verklebt sein oder gestanzt bzw. verpresst werden.

Wie in den Figuren 3 und 5 erkennbar können die Rahmenelemente 19 unterschiedlich ausgestaltet sein. Ein Rahmenelement kann eine große Öffnung aufweisen, die nahezu der Gesamtfläche des Rahmenelements entspricht. Dadurch kann eine hohe Filterleistung des Filterelements 18 sichergestellt werden. Ein weiteres Rahmenelement 19 kann Unterteilungen innerhalb der Öffnung, in einer Art Sprossen, aufweisen. Dadurch kann verhindert werden, dass sich das Filterelement 18 aus dem Rahmen bewegt, wenn der Luftstrom dort passiert.

Fig. 6 zeigt eine Detailansicht des Gelenks 12 aus Fig. 2. In dieser Ausführungsform ist das Gelenk durch ein Verbindungselement 20 ausgeformt, dass die beiden Seitenabschnitte 3 benachbarter Teilabschnitte 15 miteinander verbindet. Das Verbindungselement 20 ist u-förmig ausgebildet und kontaktiert einen jeweiligen Endbereich von zwei benachbarten Teilabschnitten 15. Der Endbereich umfasst den Seitenabschnitt 3. Zur Fixierung des u-förmigen Elements an den Seitenabschnitten 3 kann das Verbindungselement 20 zumindest eine Klemmschiene 21 aufweisen. Hier ist ein Schenkel des u-förmigen Elements mit jeweils einer Klemmschiene 21 mit jeweils einem Seitenabschnitt 3 verbunden. Die Seitenabschnitte 3 der Teilabschnitte 15 sind vereinfacht dargestellt, ohne detaillierte Darstellung der Filterelemente 18. Durch einen Falz 14 können die Teilabschnitte 15 gegeneinander verkippt werden, um in der Zickzack-Struktur gemäß Fig. 2 angeordnet zu werden.

Das u-Förmige Element ist insbesondere aus einem recyclebaren Material ausgebildet, beispielsweise aus einem Papiermaterial. Dadurch können an dem Verbindungselement 20 ebenso Partikel abgeschieden werden.

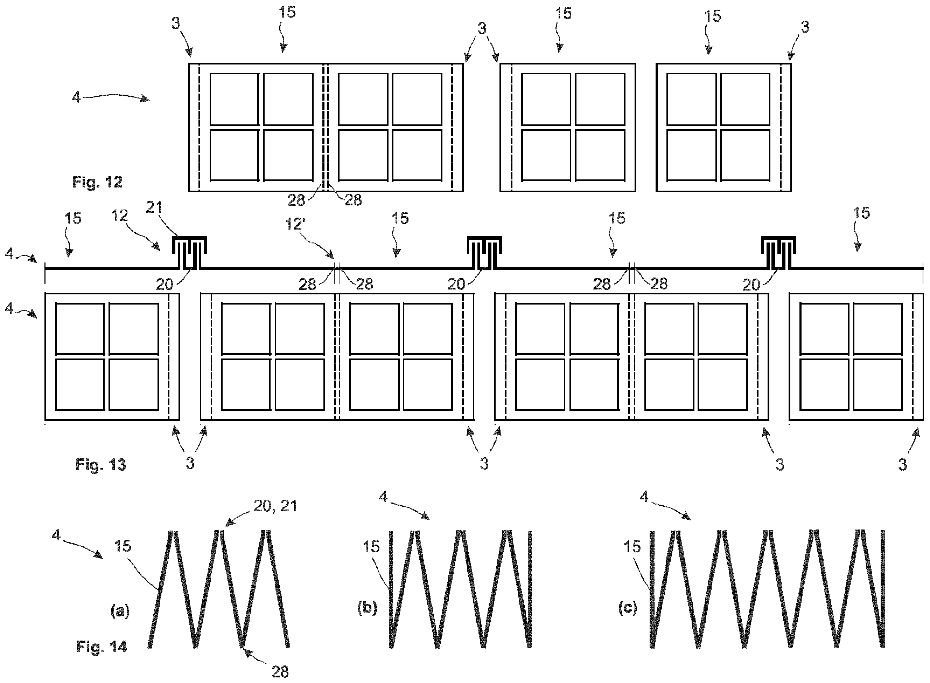

Fig. 7 zeigt eine weitere Ausführungsform des Gelenks aus Fig. 2. Das Verbindungselement ist zur Abscheidung von Partikeln ausgebildet. Das Verbindungselement 20 weist Laschen 24 auf, die in Schlitze 27 (dargestellt in Fig. 12) in den Teilabschnitten 15 verankert sind. Die Endbereiche mit den Seitenabschnitten 3 sind daher bevorzugt abgewinkelt zu dem restlichen Verlauf der Rahmenelemente 19, d. h. zu der ebenen Fläche der Teilabschnitte 15, angeordnet, siehe Fig. 7 (a). Dadurch kann jede Lasche direkt in die Schlitze eingreifen. Auch in dieser Ausführungsform können die Teilabschnitte 15 gegeneinander gekippt werden, um in einer Zickzack-Struktur angeordnet zu werden, gezeigt in Fig. 7 (b).

Die Verbindung der Teilabschnitte in Fig. 5 und 7 erfolgt insbesondere formschlüssig und/oder luftdicht, sodass der Luftstrom gezielt und ohne Fehlleitung von der Eintrittsöffnung an der Eintrittsseite in Richtung der Austrittsöffnung an der Austrittsseite verlaufen kann.

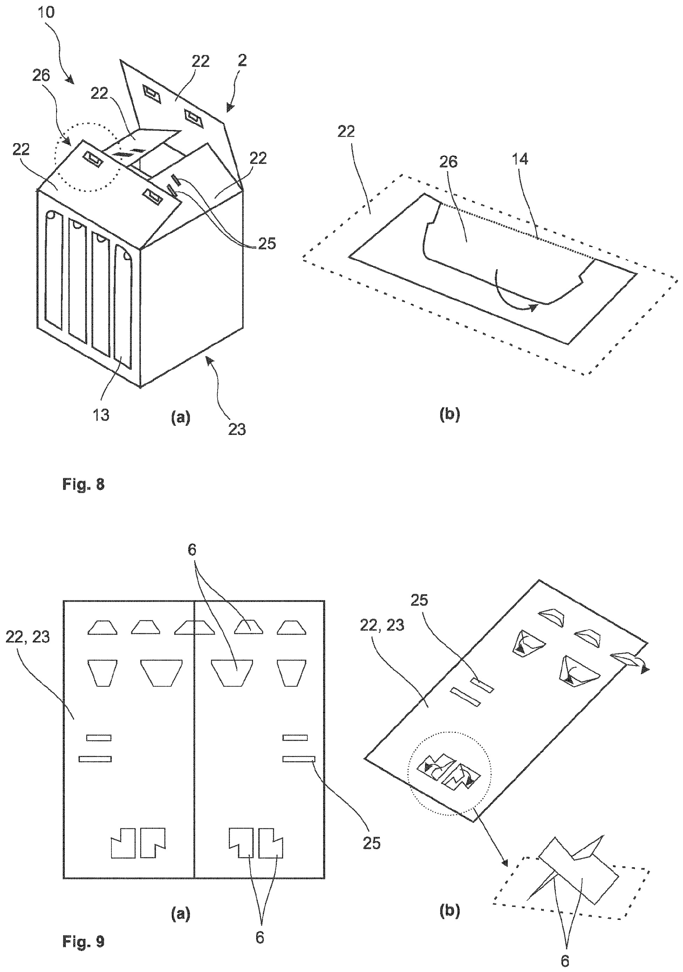

Fig. 8 zeigt eine Ausführungsform des Aufnahmeelements 2 in einer isometrischen Darstellung mit Detailansicht eines Verschlusselements 26. Die Verschlusselemente 26 sind an der Oberseite 22 des Aufnahmeelements 2 angeordnet. Die Oberseite 2 weist vier Elemente auf, die gemeinsam einen Deckel ausbilden. An zwei der Elemente sind jeweils zwei Verschlusselemente 26 angeordnet. Zwei weitere Elemente des Deckels weisen jeweils zwei Schlitze 25 auf. Die Schlitze 25 sind versetzt zueinander angeordnet. Folglich sind auch die Verschlusselemente 26 in gleicher Weise versetzt zueinander angeordnet.

In der Detailansicht in Fig. 8 (b) ist erkennbar, dass das Verschlusselement 26 aus einer Lasche besteht, die in einen Schlitz 24 in einem weiteren Element des Deckels eingreifen kann. Die Lasche wird von oben in den Schlitz 25 eingeführt und in Pfeilrichtung umgebogen. Dadurch weist das Aufnahmeelement 2 eine ebene Oberseite 22 auf. Die Aufnahmeelemente 2 können daher leicht gestapelt und gemäß Fig. 14 (b) angeordnet werden. Die Oberseite 20 ist vergleichbar zu einem Verpackungskarton ausgestaltet, aufweisende zwei innen liegende Laschen sowie zwei außenliegende Laschen, die gemeinsam einen Deckel ausbilden.

Fig. 9 zeigt eine Oberseite 22 oder eine Unterseite 23 des Aufnahmeelements 2. Diese können identisch ausgebildet sein.

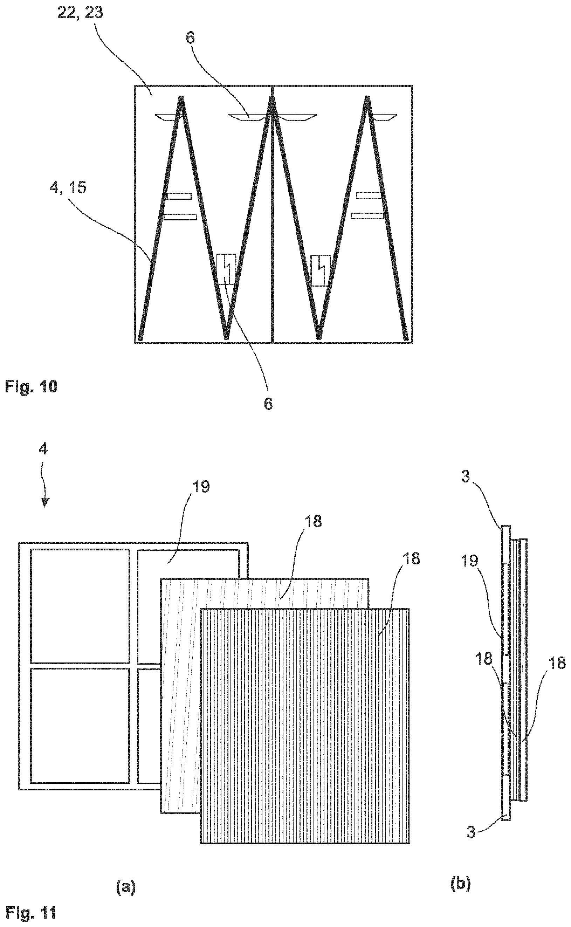

In dieser Ausführung sind mehrere Lasche 6 dargestellt, die durch jeweils eine Ausstanzung in dem Aufnahmeelement 2 gebildet sind, siehe Fig. 9 (a). Die Laschen 6 können wie in Fig. 9 (b) dargestellt abgewinkelt werden, insbesondere durch einen Falz oder eine Stanzung, und so zwischen zwei Teilabschnitte 15 eingreifen und diese positionieren. Die Laschen 6 können an der Oberseite 22 und/oder der Unterseite 23 derart versetzt angeordnet sein, dass die Teilabschnitte 15 positioniert, insbesondere in einer Zickzack-Struktur, gehalten werden, wie in Fig. 10 gezeigt. Dabei können die Laschen 6 konische Seitenkanten aufweisen, sodass die Teilabschnitte 15 geneigt zwischen der Eintrittsseite 9 und der Austrittsseite 8 gehalten werden, wie in Fig. 2 zu sehen.

Fig. 9 (b) zeigt weiterhin zwei Laschen 6, die miteinander verbindbar sind, um eine Pyramidenform auszubilden. Dadurch kann eine besonders stabile Form erreicht werden, die zu einer besonders zuverlässigen Positionierung des Filtereinsatzes 4 dient.

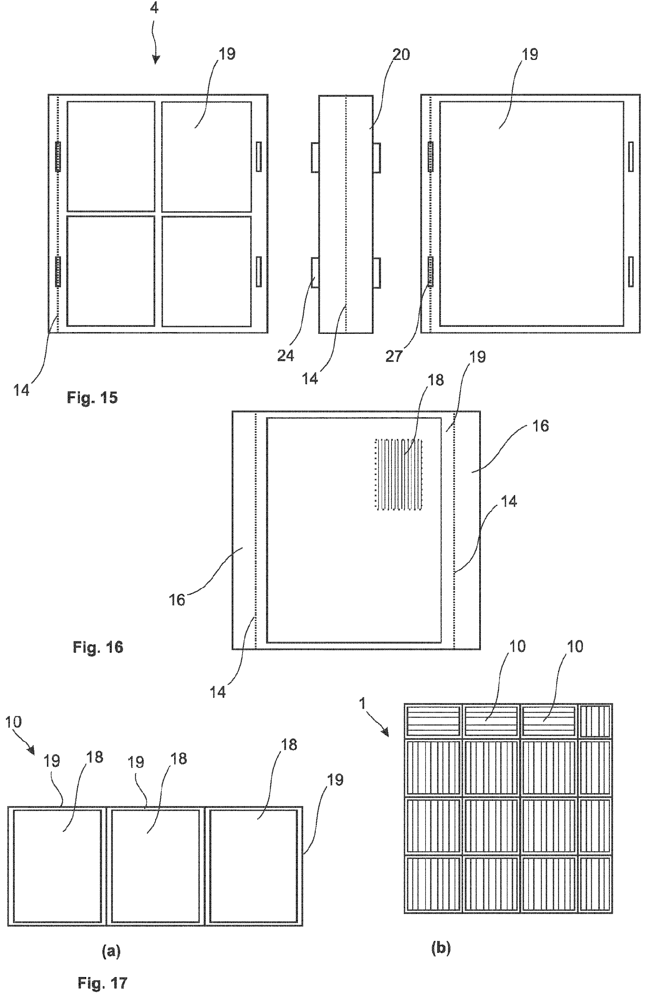

Fig. 11 zeigt eine weitere Ausführungsform eines Filtereinsatzes 4, der nur ein Rahmenelement 19 und zwei Filterelemente 18 aufweist. Eine Ausführung mit nur einem Filterelement 18 ist ebenso denkbar. Das zumindest eine Filterelement kann mit dem Rahmenelement 19 verklebt sein und dadurch in Form gehalten werden. Das Rahmenelement kann auch ohne Sprossen ausgebildet sein, wie in Fig. 16 dargestellt. Eine derartige Ausführung dient insbesondere zur Ausbildung eines Filtermoduls wie in den Fig. 15, 16 und 17 (a) gezeigt. Insbesondere kann daher zumindest eine Seitenabschnitt 3 abgewinkelt ausgebildet sein, insbesondere um 90° abgewinkelt bezüglich der ebenen Fläche des Teilabschnitts.

Fig. 12 zeigt eine Ausführungsform von zusammengesetzten Teilabschnitte 15. Die Teilabschnitte sind unterschiedliche ausgeformt. So weist eines der Teilabschnitte einen Rahmen mit zwei zueinander abwinkelbaren ebenen Flächen auf. Ein Teilabschnitt 15 kann daher im Querschnitt zu einer V-Form gefaltet werden, gezeigt in Fig. 14, und einen Teilbereich des Filtereinsatzes 4 ausbilden. Der in Fig. 12 linke Teilabschnitt 15 weist zwei Flächen auf, die durch zumindest einen Falz 28, in der dargestellten Ausführung durch zwei zueinander parallele Falze 28, zueinander gekippt werden können. Eines der Gelenke aus Fig. 2 kann daher durch eine derartige Verbindung ohne Verbindungselement 20 ausgeformt sein.

Fig. 13 zeigt ein Filtereinsatz, der aus unterschiedlichen Teilabschnitten 15 zusammengesetzt werden kann. Gezeigt ist oben eine Schnittdarstellung im zusammengesetzten Zustand und darunter eine Seitenansicht vor dem Zusammensetzen.

Fig. 14 zeigt den gefalteten Zustand unterschiedlicher Filtereinsätze 4. Der Filtereinsatz 4 in Fig. 14 (a) zeigt die Ausführung nach Fig. 13. Die Weiteren Ausführungen 14 (b) und (c) zeigen, dass die endseitigen Teilabschnitte 15 auch parallel zu einer Ebene von der Eintrittsseite 9 zu der Austrittsseite 8 ausgerichtete werden können. Dies kann beispielsweise durch einen Teilabschnitt 15 wie links in Fig. 21 gezeigt erreicht werden.

In den Ausführungen der Figuren 12 bis 14 ist erkennbar, dass die Seitenabschnitte 3 aller Teilabschnitte 15, die über ein Verbindungselement 20 miteinander verbunden sind, an einer Seite des Filtereinsatzes 4 angeordnet sind. Demnach können in einer Ausführungsform alle Verbindungselemente 20 entweder in Richtung der Eintrittsseite 9 oder in Richtung der Austrittsseite 8 ausgerichtet werden, wenn der Filtereinsatz 4 in dem Aufnahmeelement 2 aufgenommen ist.

Das Rahmenelement aus Fig. 3, 4 oder 11 kann insbesondere auch wie in Fig. 15 dargestellt ausgebildet sein. Direkt in einem Falz 14 zwischen den abgewinkelten Abschnitten sind Schlitze 27, insbesondere als Langlöcher, ausgeformt, in welche die Laschen 24 des Verbindungselements 20 eingreifen können.

Die Verbindung der beiden Rahmenelemente 19 mit dem Verbindungselement 20 kann insbesondere ausgeführt sein wie in Fig. 7 dargestellt. Auch dadurch können beliebig viele Rahmenelemente miteinander verbunden werden, um eine zusammenhängende Filterfläche zu erzielen. Der Filtereinsatz kann daher zumindest wie in Fig. 15 dargestellt, und insbesondere mit einem zwischen den Rahmenelementen angeordneten Filterelement 18, ausgebildet sein. Die Filterleistung kann durch zusätzliches Anbringen eines weiteren Filtereinsatzes verstärkt werden. Dieser weitere Filtereinsatz kann wie in Fig. 16 dargestellt, ausgebildet sein.

Der Filtereinsatz aus Fig. 15 kann beispielsweise eine Tiefe von 40 mm bis 60 mm, insbesondere 55 mm aufweisen.

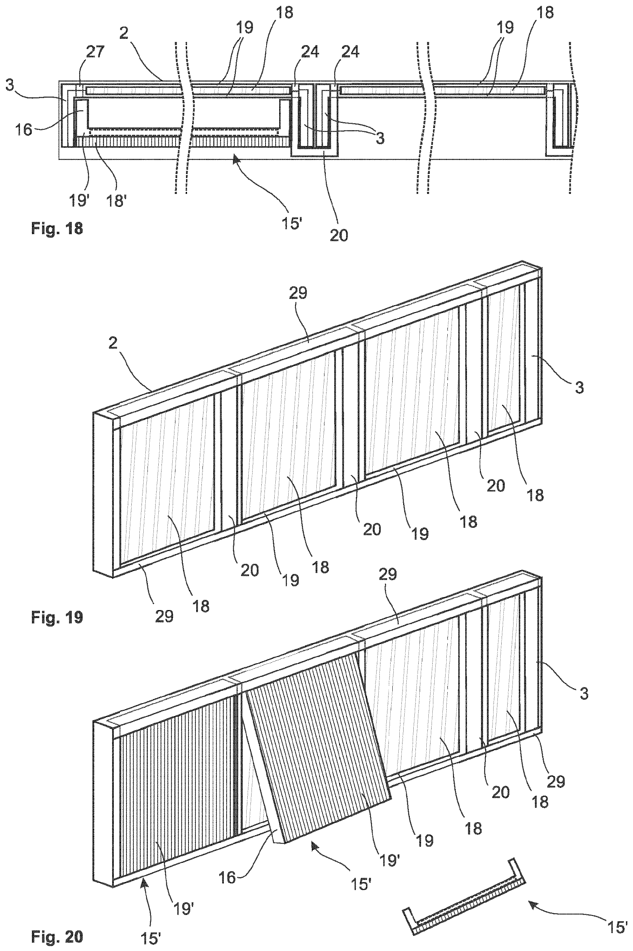

Fig. 16 zeigt ein Rahmenelement 19 mit einem Filterelement 18 (das Filterelement 18 ist nur beispielhaft in einem kleinen Bereich dargestellt). Dar Rahmenelement 19 weist an zwei gegenüberliegenden Seitenabschnitten je eine Klemmlasche 16 auf, die in einem eingebauten Zustand in dem Aufnahmeelement 2 mit je einem Verbindungselement 20 kontaktiert werden kann. Dadurch können die beiden Filtereinsätze 4, die in Fig. 15 und Fig. 16 dargestellt sind, parallel zueinander in dem Aufnahmeelement 2 gehalten werden. Eine Derartige Anordnung zeigen Fig. 17 (a) sowie die Figuren 18 bis 20. Der Filter aus Fig. 16 dient hierbei als eine Art Vorfilter, der einfach und mehrfach ausgetauscht werden kann, wie in Fig. 20 gezeigt. Dadurch kann die Standzeit verlängert werden.

Insbesondere können unterschiedliche Filtermedien für den Vorfilter und das eigentliche Filterelement eingesetzt werden, wodurch die Filtrationsergebnisse hinsichtlich Standzeit und Effizienz verbessert werden können.

Die dargestellten Filterelemente und Rahmenelemente können an den Seitenkanten Abmessungen von 600 mm bis 1250 mm, insbesondere 750 mm bis 1000 mm aufweisen. Beispielsweise kann ein Element Abmessungen von 750 mm x 1000 mmm oder 900 mm x 1000 mm aufweisen. Ebenso können die Elemente quadratische Abmessungen besitzen.

Die Filterelemente für ein Filtermodul nach Fig. 2 kann beispielsweise eine Breite von 200 mm bis 500 mm aufweisen, sodass unterschiedliche tiefe Aufnahmeelemente und damit unterschiedlich Tiefe Filtermodule ausgebildet werden können. Ein Rahmenelement kann beispielsweise eine Breite von 485 mm aufweisen. Die Höhe kann beispielsweise 750 mm, 900 mm, 1000 mm oder 1250 mm betragen.

Die Seitenabschnitte, die in Form von Klapplaschen relativ zu der Ebene des Teilabschnitts abgeklappt werden können, wie beispielsweise auch die Klemmlasche 16, können eine Länge von 40 mm bis 60 mm, insbesondere 55 mm aufweisen.

Das Aufnahmeelement 2 in Fig. 17 (a) weist eine rechteckige oder quadratische Form auf, wobei ein Abstand zwischen der Eintrittsseite 9 und der Austrittsseite 8 um ein Vielfaches kleiner als eine Seitenkante der Grundform ist. Dadurch kann der die Filterstufe 10 beispielsweise als zweite Filterstufe in einem bestehenden Filtermodul 1 nachgerüstet werden. Die Darstellung zeigt eine Draufsicht von der Eintrittsseite auf die Filterstufe 10, wobei drei nebeneinander angeordnete Filtereinsätze aus Fig. 16 als Vorfilter erkennbar ist. Hinter dem sichtbaren Filtereinsatz sind drei miteinander verbundene Filtereinsätze aus Fig. 15 angeordnet, und zwar parallel zu dem sichtbaren Filtereinsatz. Zur Fixierung der beiden Filtereinsätze wird an den Verbindungselementen 20 die Klemmlasche 16 geklemmt (nicht zu sehen). Dadurch kann eine zweistufige Filterung ausgebildet werden.

Bei der Filterstufe in Fig. 17 (a) handelt es sich um ein relativ flaches Modul, bei welchem die Seitenabschnitte der Rahmenelemente übereinander angeordneter Filtereinsätze stoßartig aufeinander liegen und sich zueinander abdecken. Dadurch können Fehlluftströmungen verhindert werden.

Fig. 17 (b) zeigt eine weitere Ausführungsform eines Filtermoduls 1 aus mehreren Filterstufen 10. Jede Filterstufe bildet in dieser Ausführung ein komplettes Filtermodul 1 aus. Die Filtermodule sind gestapelt und nebeneinander angeordnet. Insbesondere ist jede Filterstufe 10 wie in Fig. 1, 2 oder 8 bis 10 ausgebildet. Im Unterschied zur Darstellung in Fig. 17 (a) ist daher der Filtereinsatz als Zickzack-Struktur innerhalb des Aufnahmeelements gehalten. Unterschiedliche Größen und Ausrichtungen können umgesetzt werden, um eine zusammenhängende Fläche auszubilden.

Fig. 18 zeigt eine weitere Ausführungsform eines Filtermoduls 10. Eine derartige Ausführung kann als Kassettenmodul bezeichnet werden, da das Aufnahmeelement 2 relativ flach ausgebildet ist. In ein derartiges Aufnahmeelement können insbesondere Teilabschnitte nach Fig. 15 und 16 eingeschoben werden, wobei die einzelnen Teilabschnitte mit Verbindungselementen 20 nach Fig. 7 verbunden werden. In der Schnittdarstellung ist erkennbar, wie sich der Teilabschnitt 15', d. h. der Vorfilter, an den Verbindungselementen 20 abstützt. Der Teilabschnitt 15' ist insbesondere nach Fig. 16 ausgebildet.

Durch die Abstützungen und Klemmung des Teilabschnitts 15', d. h. des Vorfilters, in dem Aufnahmeelement 2 und an den Verbindungselementen 20 kann dieser nicht nach rechts oder links verrutschen und dennoch einfach ausgetauscht werden.

Fig. 19 zeigt eine weitere Ansicht der Ausführungsform aus Fig. 18. Dargestellt ist ein Aufnahmeelement 2, in welches vier Teilabschnitte 15 aufgenommen sind. Der rechte Teilabschnitt 15 ist mit einer geringeren Breite ausgebildet, es könnte jedoch auch die gleiche Breite wie die übrigen Teilabschnitte 15 aufweisen. Es ist mit einer derartigen Ausgestaltung möglich, beliebig viele Teilabschnitte 15 nebeneinander anzuordnen, um eine beliebige Fläche auszubilden.

In der Ansicht in Fig. 18 sind die Filterelemente nach Fig. 15 bereits in dem Aufnahmeelement 2 angeordnet. Sichtbar sind die Filterelemente 18 und die Verbindungselemente 20.

Fig. 20 zeigt eine weitere Ansicht der Ausführungsform aus Fig. 18 und 19. In das linke "Fach" ist bereits ein Vorfilter nach Fig. 16 eingeschoben und damit fixiert. In das zweite "Fach" von links ist das Einschieben eines derartigen Vorfilters dargestellt. Durch die abgewinkelten Klapplaschen 16 kann sich der Teilabschnitt 15' mit den Seitenabschnitten an je einem Verbindungselement 20 abstützen. Zur besseren Übersicht ist der Teilabschnitt 15' noch in einer Schnittdarstellung dargestellt.

Das Aufnahmeelement 2 weist an einer Oberseite und einer Unterseite Vorsprünge 29 auf, hinter welche die Teilabschnitte 15, 15' klemmend gehalten werden können. Die Vorsprünge 29 verhindern ein Herausrutschen der Teilabschnitte 15, 15' aus dem Aufnahmeelement 2 bzw. aus der Längsebene des Aufnahmeelements 2. Insbesondere der Vorfilter, d. h. der Teilabschnitt 15', kann aufgrund der Klemmlaschen 16 und der sonstigen Ausbildung einfach ausgetauscht werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. So können beispielsweise die Laschen 24 eine Geometrie und Anordnung aufweisen, die von der dargestellten Ausführungsform abweichen. Insbesondere kann die Anzahl der Teilabschnitte an die zur Verfügung stehende Fläche angepasst werden. Beispielsweise können manche Teilabschnitte geneigt zwischen der Eintrittsseite und der Austrittsseite verlaufen. Endseitige Teilabschnitte 15 können dabei von der Eintrittsseite in Richtung der Austrittsseite ausgerichtet sein, ohne geneigt zu sein.

In einer weiteren Ausführung, insbesondere nach Fig. 17 (a), können die Teilabschnitte 15' quer in dem Aufnahmeelement angeordnet sein, und daher parallel zu der Eintrittsseite bzw. zu der Austrittsseite verlaufen. Die Teilabschnitte 15' können folglich auch im Wesentlichen quer zu dem Luftstrom ausgerichtet sein.

Unterschiedliche Ausführungen der Filterstufe können zu unterschiedlichen Filtermodulen kombiniert werden, oder ein Filtermodul an sich ausbilden.

### Bezugszeichenliste

- 1: Filtermodul
- 2: Aufnahmeelement
- 3: Seitenabschnitt
- 4: Filtereinsatz
- 5: Falz des Filterelements
- 6: Lasche
- 7: Aussparung
- 8: Austrittsseite
- 9: Eintrittsseite
- 10: Filterstufe
- 11: Hohlraum
- 12: Gelenk
- 13: Öffnung der Eintrittsseite
- 14: Falz
- 15: Teilabschnitt
- 16: Klemmlasche
- 18: Filterelement
- 19: Rahmenelement
- 20: Verbindungselement
- 21: Klemmschiene
- 22: Oberseite
- 23: Unterseite
- 24: Lasche
- 25: Schlitz
- 26: Verschlusselement
- 27: Schlitz
- 28: Falz
- 29: Vorsprung

## Patentansprüche

1. Filterstufe (10) zur Verwendung in einem Filtermodul (1), welches zur Abscheidung von Partikeln aus verunreinigter Luft, insbesondere zur Abscheidung von Farbpartikeln aus einem Luftstrom, ausgebildet ist,
mit einem Aufnahmeelement (2), das eine Eintrittsseite (9), für den Eintritt eines zu reinigenden Luftstroms, und eine Austrittsseite (8), für den Austritt des gereinigten Luftstroms, aufweist, wobei die Eintrittsseite (9) und die Austrittsseite (8) gegenüberliegend an dem Aufnahmeelement (2) angeordnet sind,
mit einem Filtereinsatz (4), der in dem Aufnahmeelement (2) aufgenommen ist,
wobei der Filtereinsatz (4) zumindest zwei an einem Seitenabschnitt (3) miteinander verbundene Teilabschnitte (15) aufweist, die insbesondere jeweils als ebene Fläche oder als zwei zueinander abgewinkelte ebene Flächen ausgebildet sind, wobei die Teilabschnitte (15) über zumindest ein Verbindungselement (20) miteinander verbunden sind,
wobei jeder Teilabschnitt (15) als Sandwichpaneel ausgebildet ist, und zumindest ein Filterelement (18) und ein Rahmenelement (19) aufweist, und
wobei das Rahmenelement (19) aus einem Papiermaterial ausgebildet ist.

2. Filterstufe nach Anspruch 1,
**dadurch gekennzeichnet,**
**dass** der Filtereinsatz (4) zumindest drei, insbesondere drei bis zehn, Teilabschnitte (15) aufweist.

3. Filterstufe nach einem der vorstehenden Ansprüche, **dadurch gekennzeichnet,**
**dass** zumindest zwei, insbesondere endseitig angeordnete, Teilabschnitte (15) parallel zu einer Verbindungsebene zwischen der Eintrittsseite (9) und der Austrittsseite (8) ausgerichtet sind, wobei die Verbindungsebene als eine virtuelle Ebene, die rechtwinklig zwischen der Eintrittsseite (9) und der Austrittsseite (8) verläuft, ausgebildet ist.

4. Filterstufe nach einem der vorstehenden Ansprüche, **dadurch gekennzeichnet,**
**dass** zumindest zwei, insbesondere alle, Teilabschnitte (15) geneigt, insbesondere um einen Winkel zwischen 5 und 50° geneigt, zu einer Verbindungsebene zwischen der Eintrittsseite (9) und der Austrittsseite (8) ausgerichtet sind, wobei die Verbindungsebene als eine virtuelle Ebene, die rechtwinklig zwischen der Eintrittsseite (9) und der Austrittsseite (8) verläuft, ausgebildet ist.

5. Filterstufe nach einem der vorstehenden Ansprüche, **dadurch gekennzeichnet,**
**dass** Seitenabschnitte (3) benachbarter Teilabschnitte (15), die über jeweils zumindest ein Verbindungselement (20) miteinander verbunden sind, an einer Seite des Filtereinsatzes (4) angeordnet sind.

6. Filterstufe nach Anspruch 5,
**dadurch gekennzeichnet,**
**dass** das Verbindungselement (20) zumindest eine Klemmschiene (21) umfasst und/oder zur Abscheidung von Partikeln dient.

7. Filterstufe nach Anspruch 5 oder 6,
**dadurch gekennzeichnet,**
**dass** das Verbindungselement (20) u-förmige ausgebildet ist und einen jeweiligen Endbereich von zwei benachbarten Teilabschnitten (15) umgreift und/oder kontaktiert.

8. Filterstufe nach einem der vorstehenden Ansprüche, **dadurch gekennzeichnet,**
**dass** der Filtereinsatz (4) als eine Zickzack-Struktur in dem Aufnahmeelement (2) angeordnet ist.

9. Filterstufe nach einem der vorstehenden Ansprüche, **dadurch gekennzeichnet,**
**dass** das Aufnahmeelement (2) eine Oberseite (22) und eine Unterseite (23) aufweise, wobei die Oberseite (22) und/oder die Unterseite (23) zumindest eine Lasche (6) aufweist, die durch eine Ausstanzung in dem Aufnahmeelement (2) gebildet ist, wobei die Lasche (6) zwischen zwei Teilabschnitte (15) eingreift und diese positioniert.

10. Filterstufe nach Anspruch 9,
**dadurch gekennzeichnet,**
**dass** zumindest zwei Laschen (6) an der Oberseite (22) und/oder der Unterseite (23) derart versetzt angeordnet sind, dass die Teilabschnitte (15) positioniert, insbesondere in einer Zickzack-Struktur, gehalten werden.

11. Filterstufe nach einem der Ansprüche 9 oder 10, **dadurch gekennzeichnet,**
**dass** zwei Laschen (6) miteinander verbindunbar sind, um eine Pyramidenform auszubilden, und/oder
**dass** zumindest eine Lasche (6) konische Seitenkanten aufweist, sodass die Teilabschnitte (15) des Filtereinsatzes (4) geneigt, insbesondere in einer Zickzack-Struktur, zwischen der Eintrittsseite (9) und der Austrittsseite (8) gehalten werden.

12. Filterstufe nach einem der vorstehenden Ansprüche, **dadurch gekennzeichnet,**
**dass** das Aufnahmeelement (2) und/oder der Filtereinsatz (4) ein rezyklierbares Material und/oder Polyestermaterial enthalten.

13. Filterstufe nach einem der vorstehenden Ansprüche, **dadurch gekennzeichnet,**
**dass** die Filterstufe (10) ein Einschubmodul in einem Filtermodul (1) ausbildet.

14. Filterstufe nach einem der vorstehenden Ansprüche, **dadurch gekennzeichnet,**
**dass** das Aufnahmeelement (2) an der Eintrittsseite (9) und an der Austrittsseite (8) eine quadratische oder rechteckige Grundform aufweist, wobei ein Abstand zwischen der Eintrittsseite (9) und der Austrittsseite (8) um ein Vielfaches kleiner als eine Seitenkante der Grundform ist, sodass ein flaches Aufnahmeelement (2) ausgebildet ist, wobei die Teilabschnitte (15) vorzugsweise quer zu dem Luftstrom ausgerichtet sind.

## Claims

1. Filter stage (10) for use in a filter module (1) for separating particles from contaminated air, in particular for separating paint particles from an airflow,
comprising a receiving element (2) which has an inlet side (9) for admitting an airflow to be cleaned and an outlet side (8) for discharging the cleaned airflow, the inlet side (9) and the outlet side (8) being arranged opposite one another on the receiving element (2),
comprising a filter insert (4) which is received in the receiving element (2),
wherein the filter insert (4) has at least two sub-portions (15) which are interconnected at a side portion (3) and which in particular are each formed as a flat surface or as two flat surfaces at an angle to one another, the sub-portions (15) being interconnected via at least one connecting element (20),
wherein each sub-portion (15) is formed as a sandwich panel and has at least a filter element (18) and a frame element (19), and
wherein the frame element (19) is made of a paper material.

2. Filter stage according to claim 1,
**characterised**
**in that** the filter insert (4) has at least three, in particular three to ten, sub-portions (15).

3. Filter stage according to any of the preceding claims, **characterised**
**in that** at least two sub-portions (15), in particular arranged at the ends, are orientated parallel to a connecting plane between the inlet side (9) and the outlet side (8), the connecting plane being formed as a virtual plane extending perpendicularly between the inlet side (9) and the outlet side (8).

4. Filter stage according to any of the preceding claims,
**characterised**
**in that** at least two, in particular all, sub-portions (15) are orientated at an inclination, in particular an inclination through an angle of between 5 and 50°, to a connecting plane between the inlet side (9) and the outlet side (8), the connecting plane being formed as a virtual plane extending perpendicularly between the inlet side (9) and the outlet side (8).

5. Filter stage according to any of the preceding claims, **characterised**
**in that** side portions (3) of adjacent sub-portions (15) which are interconnected via at least one connecting element (20) are arranged on a side of the filter insert (4).

6. Filter stage according to claim 5,
**characterised**
**in that** the connecting element (20) comprises at least one clamping rail (21) and/or is for separating particles.

7. Filter stage according to either claim 5 or claim 6, **characterised**
**in that** the connecting element (20) is u-shaped and encompasses and/or contacts an associated end region of two adjacent sub-portions (15).

8. Filter stage according to any of the preceding claims, **characterised**
**in that** the filter insert (4) is arranged as a zigzag structure in the receiving element (2).

9. Filter stage according to any of the preceding claims, **characterised**
**in that** the receiving element (2) has an upper face (22) and a lower face (23), the upper face (22) and/or the lower face (23) having at least one tab (6) formed by a clearance in the receiving element (2), the tab (6) engaging between two sub-portions (15) and positioning them.

10. Filter stage according to claim 9,
**characterised**
**in that** at least two tabs (6) on the upper face (22) and/or the lower face (23) are arranged offset in such a way that the sub-portions (15) are held in position, in particular in a zigzag structure.

11. Filter stage according to either claim 9 or claim 10, **characterised**
**in that** two tabs (6) can be interconnected to form a pyramid shape, and/or
**in that** at least one tab (6) has conical side edges, in such a way that the sub-portions (15) of the filter insert (4) are held at an inclination, in particular in a zigzag structure, between the inlet side (9) and the outlet side (8).

12. Filter stage according to any of the preceding claims, **characterised**
**in that** the receiving element (2) and/or the filter insert (4) contain a recyclable material and/or polyester material.

13. Filter stage according to any of the preceding claims, **characterised**
**in that** the filter stage (10) forms a slide-in module in a filter module (1).

14. Filter stage according to any of the preceding claims, **characterised**
**in that** the receiving element (2) has a square or rectangular basic shape at the inlet side (9) and at the outlet side (8), a distance between the inlet side (9) and the outlet side (8) being multiple times smaller than a side edge of the basic shape, in such a way that a flat receiving element (2) is formed, the sub-portions (15) preferably being orientated transverse to the airflow.

## Revendications

1. Étage de filtration (10) destiné à être utilisé dans un module de filtration (1) conçu pour séparer des particules d'un air contaminé, en particulier pour séparer des particules de peinture d'un flux d'air,
comprenant un élément de réception (2) qui présente un côté entrée (9) pour l'entrée d'un flux d'air à purifier et un côté sortie (8) pour la sortie du flux d'air purifié, le côté entrée (9) et le côté sortie (8) étant disposés de manière opposée sur l'élément de réception (2),
comprenant une cartouche filtrante (4) qui est reçue dans l'élément de réception (2),
dans lequel la cartouche filtrante (4) présente au moins deux sous-sections (15) reliées entre elles au niveau d'une section latérale (3) et lesquelles sont en particulier réalisées chacune sous la forme d'une surface plane ou de deux surfaces planes formant un angle l'une par rapport à l'autre, les sous-sections (15) étant reliées entre elles par au moins un élément de liaison (20),
dans lequel chaque sous-section (15) est réalisée sous la forme d'un panneau sandwich et présente au moins un élément filtrant (18) et un élément cadre (19), et
dans lequel l'élément cadre (19) est réalisé en papier.

2. Étage de filtration selon la revendication 1, **caractérisé en ce**
**que** la cartouche filtrante (4) présente au moins trois, en particulier trois à dix, sous-sections (15).

3. Étage de filtration selon l'une des revendications précédentes,
**caractérisé en ce**
**qu'**au moins deux sous-sections (15), en particulier disposées aux extrémités, sont orientées parallèlement à un plan de liaison entre le côté entrée (9) et le côté sortie (8), le plan de liaison étant conçu comme un plan virtuel qui s'étend perpendiculairement entre le côté entrée (9) et le côté sortie (8).

4. Étage de filtration selon l'une des revendications précédentes,
**caractérisé en ce**
**qu'**au moins deux, en particulier toutes les sous-sections (15) sont orientées de manière inclinée, en particulier selon un angle compris entre 5 et 50°, par rapport à un plan de liaison entre le côté entrée (9) et le côté sortie (8), le plan de liaison étant conçu comme un plan virtuel qui s'étend perpendiculairement entre le côté entrée (9) et le côté sortie (8).

5. Étage de filtration selon l'une des revendications précédentes,
**caractérisé en ce**
**que** des sections latérales (3) de sous-sections (15) adjacentes, qui sont chaque fois reliées entre elles par au moins un élément de liaison (20), sont disposées sur un côté de la cartouche filtrante (4).

6. Étage de filtration selon la revendication 5, **caractérisé en ce**
**que** l'élément de liaison (20) comprend au moins un rail de serrage (21) et/ou sert à la séparation de particules.

7. Étage de filtration selon la revendication 5 ou 6, **caractérisé en ce**
**que** l'élément de liaison (20) est réalisé en forme de U et entoure et/ou est en contact avec une zone d'extrémité respective de deux sous-sections (15) adjacentes.

8. Étage de filtration selon l'une des revendications précédentes,
**caractérisé en ce**
**que** la cartouche filtrante (4) est disposée sous la forme d'une structure en zigzag dans l'élément de réception (2).

9. Étage de filtration selon l'une des revendications précédentes,
**caractérisé en ce**
**que** l'élément de réception (2) présente une face supérieure (22) et une face inférieure (23), la face supérieure (22) et/ou la face inférieure (23) présentant au moins une languette (6) qui est formée par une découpe dans l'élément de réception (2), la languette (6) s'engageant entre deux sous-sections (15) et les positionnant.

10. Étage de filtration selon la revendication 9, **caractérisé en ce**
**qu'**au moins deux languettes (6) sont disposées de manière décalée sur la face supérieure (22) et/ou la face inférieure (23) de manière à ce que les sous-sections (15) soient maintenues en position, en particulier selon une structure en zigzag.

11. Étage de filtration selon l'une des revendications 9 ou 10,
**caractérisé en ce**
**que** deux languettes (6) peuvent être reliées entre elles pour réaliser une forme pyramidale, et/ou
**qu'**au moins une languette (6) présente des bords latéraux coniques, de sorte que les sous-sections (15) de la cartouche filtrante (4) sont maintenues inclinées, en particulier selon une structure en zigzag, entre le côté entrée (9) et le côté sortie (8).

12. Étage de filtration selon l'une des revendications précédentes,
**caractérisé en ce**
**que** l'élément de réception (2) et/ou la cartouche filtrante (4) contiennent un matériau recyclable et/ou un matériau polyester.

13. Étage de filtration selon l'une des revendications précédentes,
**caractérisé en ce**
**que** l'étage de filtration (10) forme un module enfichable dans un module de filtration (1).

14. Étage de filtration selon l'une des revendications précédentes,
**caractérisé en ce**
**que** l'élément de réception (2) présente, du côté entrée (9) et du côté sortie (8) une forme de base carrée ou rectangulaire, une distance entre le côté entrée (9) et le côté sortie (8) étant plusieurs fois plus petite qu'un bord latéral de la forme de base, de sorte qu'un élément de réception plat (2) est formé, les sous-sections (15) étant de préférence orientées transversalement au flux d'air.
